(19) Europäisches Patentamt

European Patent Office

Office européen des brevets

(11) **EP 4 535 241 A1**

(12) # EUROPEAN PATENT APPLICATION

(43) Date of publication:
**09.04.2025 Bulletin 2025/15**

(21) Application number: **24202630.0**

(22) Date of filing: **25.09.2024**

(51) International Patent Classification (IPC):
**G06N 3/092** (2023.01)     **G06N 3/098** (2023.01)
**G06N 3/063** (2023.01)

(52) Cooperative Patent Classification (CPC):
**G06N 3/092; G06N 3/098;** G06N 3/063

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.10.2023 US 202318479613**

(71) Applicant: **VMware LLC
Palo Alto, CA 94304 (US)**

(72) Inventors:
• **Ben-Itzhak, Yaniv
12550 Herzliya (IL)**
• **Vargaftik, Shay
12550 Herzliya (IL)**

(74) Representative: **Dilg, Haeusler, Schindelmann
Patentanwaltsgesellschaft mbH
Leonrodstraße 58
80636 München (DE)**

(54) **REINFORCEMENT LEARNING-BASED DYNAMIC AGGREGATION FOR DISTRIBUTED AND FEDERATED LEARNING**

(57)     A framework for implementing reinforcement learning (RL)-based dynamic aggregation for distributed learning (DL) and federated learning (FL) is provided. In one set of embodiments, the framework includes an RL agent that interacts with the parameter server and clients of a DL/FL system and periodically receives two inputs from the system while the system is executing a training run: a "state" comprising information regarding the current runtime properties of the system and a "reward" comprising information pertaining to one or more training metrics to be optimized. In response to these inputs, the RL agent generates an "action" comprising information for modifying the parameter server's aggregation function in a manner that maximizes future cumulative rewards expected from the DL/FL system based on the state.

FIG. 3

EP 4 535 241 A1

**Description**

<u>Background</u>

Unless otherwise indicated, the subject matter described in this section should not be construed as prior art to the claims of the present application and is not admitted as being prior art by inclusion in this section.

Distributed learning (DL) and federated learning (FL) are machine learning techniques that allow multiple computing devices/systems (known as clients) to collaboratively train an artificial neural network (ANN) under the direction of a central server (known as a parameter server). The main distinction between these two techniques is that the training dataset used by each FL client is private to that client and thus inaccessible to other FL clients. In DL, the clients are typically owned/operated by a single entity such as an enterprise and thus may have access to some or all of the same training data.

DL/FL training is performed over a series of rounds that constitute a training run. Each round in a training run usually involves transmitting, by the parameter server, a vector of the ANN's model weights to a participating subset of clients; executing, by each participating client, one or more training passes on the ANN and computing a vector of derivatives of a loss function with respect to the model weights (known as a gradient); transmitting, by each participating client, its gradient to the parameter server; aggregating, by the parameter server, the received gradients into a global gradient using an aggregation function; and updating, by the parameter server, the model weights of the ANN based on the global gradient.

<u>Brief Description of the Drawings</u>

FIG. 1 depicts an example DL/FL system.
FIG. 2 depicts an example ANN.
FIG. 3 depicts an RL-based framework for implementing dynamic aggregation in the DL/FL system of FIG. 1 according to certain embodiments.
FIG. 4 depicts an RL workflow according to certain embodiments.

<u>Detailed Description</u>

In the following description, for purposes of explanation, numerous examples and details are set forth in order to provide an understanding of various embodiments. It will be evident, however, to one skilled in the art that certain embodiments can be practiced without some of these details or can be practiced with modifications or equivalents thereof.

Embodiments of the present disclosure provide a framework for implementing reinforcement learning (RL)-based dynamic aggregation for distributed and federated learning. Dynamic aggregation in this context refers to dynamically changing the aggregation function used by a parameter server over the course of a DL/FL training run.

In one set of embodiments, the framework of the present disclosure includes an RL agent that interacts with the parameter server and clients of a DL/FL system and periodically receives two inputs from the system while the system is executing a training run: a "state" comprising information regarding the current runtime properties of the system and a "reward" comprising information pertaining to one or more training metrics to be optimized. In response to these inputs, the RL agent generates an "action" comprising information for modifying the parameter server's aggregation function in a manner that maximizes future cumulative rewards expected from the DL/FL system based on the state. The parameter server then receives the action and reconfigures its aggregation function accordingly.

Through this process, the RL agent can advantageously optimize the DL/FL system to achieve various training goals such as fast completion (i.e., convergence), improved fairness, low resource consumption/cost, and more.

**1. Example DL/FL System and Solution Architecture**

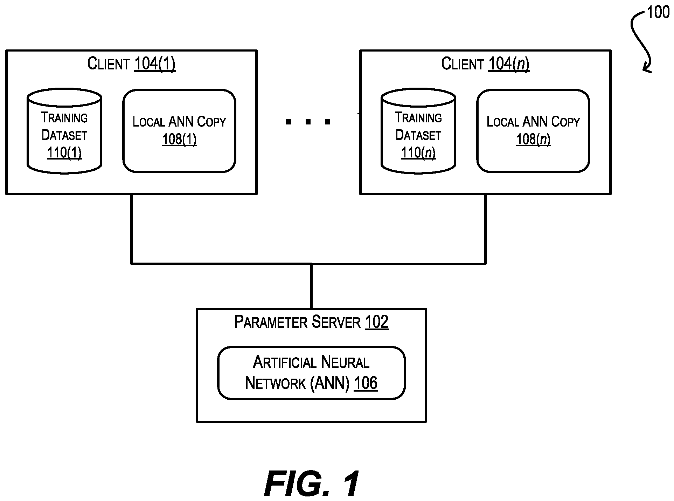

To provide context for the embodiments disclosed herein, FIG. 1 depicts an example DL/FL system 100 comprising a parameter server 102 and a set of clients 104(1)-($n$). Parameter server 102 holds a baseline (i.e., global) copy of an ANN 106 to be trained via DL or FL. Each client 104 holds a local copy 108 of ANN 106 and a local training dataset 110. In the case of FL, local training dataset 110 is private to its corresponding client 104 and thus cannot be accessed by other clients.

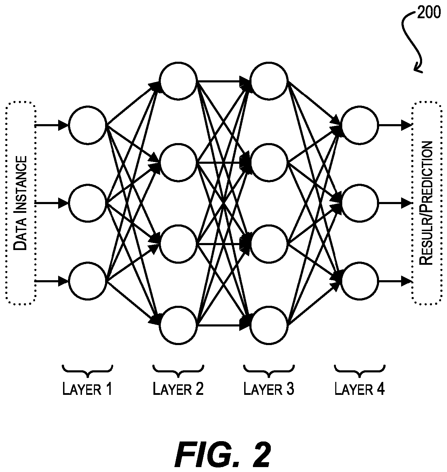

As known in the art, an ANN is a type of machine learning model comprising a collection of nodes that are organized into layers and interconnected via directed edges. For example, FIG. 2 depicts an ANN 200 that includes a total of fourteen nodes and four layers 1-4. The edges are associated with parameters (i.e., model weights, not shown) that control how a data instance, which is provided as input to the ANN via the first layer, is processed to generate a result/prediction, which is output by the last layer. These model weights are adjusted via DL/FL training in a round-based manner to optimize the ANN's performance in generating correct results/predictions.

For instance, the following is a typical sequence of operations that may be executed by parameter server 102 and clients 104(1)-($n$) of FIG. 1 for training ANN 106 in the context of a single round $r$ of a training run:

1. Parameter server 102 selects $m$ out of the $n$ clients to participate in round $r$.

2. Parameter server 102 transmits a vector of the current model weights for ANN 106 to each participating client 104.

3. Each participating client 104 receives the model weight vector and updates the model weights in local ANN copy 108 with the values in this vector.

4. Each participating client 104 performs at least one training pass on local ANN copy 108 that involves (a) providing a batch of labeled data instances in training dataset 110 (denoted as the matrix $X$) as input to local ANN copy 108, resulting in a set of results/predictions $f(X)$; (b) computing a loss vector for $X$ using a loss function $L$ that takes $f(X)$ and the labels of $X$ as input; and (c) computing, based on the loss vector, a vector of derivative values of $L$ with respect to the model weights (i.e., gradient). Generally speaking, this gradient indicates how much the output of local ANN copy 108 changes in response to changes to the ANN's model weights, in accordance with the loss vector.

5. Each participating client 104 transmits the gradient to parameter server 102.

6. Parameter server 102 receives the gradients from the participating clients and computes a global gradient by aggregating the received gradients in some manner using an aggregation function.

7. Parameter server 102 applies a gradient-based optimization algorithm such as gradient descent to update the model weights of ANN 106 in accordance with the global gradient and current round $r$ ends.

Operations (1)-(7) are subsequently repeated for additional rounds $r+1$, $r+2$, etc. until a termination criterion for the training run is reached. This termination criterion may be, e.g., a lower bound on the size of the global gradient, an accuracy threshold for ANN 106, or a number of rounds threshold.

With existing DL/FL methodologies, the aggregation function used by parameter server 102 for aggregating client gradients per operation (6) above is typically statically defined at the start of a training run, such that it remains the same for every round of that run. For example, the aggregation function may be statically defined to compute an average of the client gradients or a weighted average based on fixed weights. While this static aggregation approach is straightforward to implement, it is not always optimal in terms of training speed, resource usage, or other training goals.

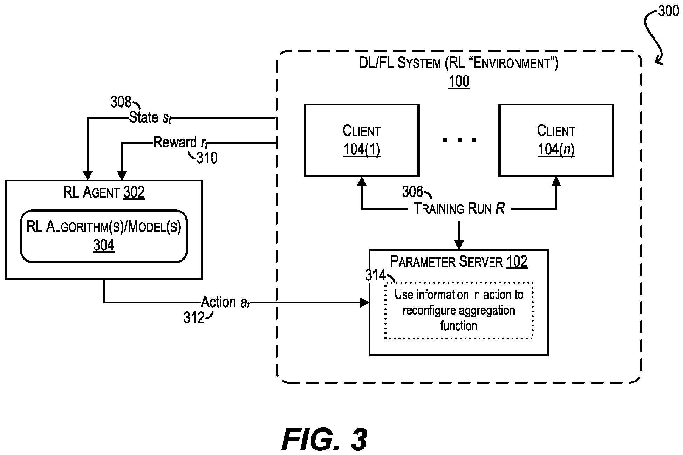

To address this, FIG. 3 depicts a novel framework 300 that leverages reinforcement learning (RL) to support dynamic aggregation in DL/FL system 100 according to certain embodiments. As mentioned previously, dynamic aggregation refers to dynamically changing the aggregation function used by parameter server 102 over the course of a training run. Framework 300 includes an RL agent 302 that is communicatively coupled with DL/FL system 100 (known as the "environment" in RL terms). RL agent 302, which employs one or more RL algorithms or models 304, may be implemented in software, in hardware, or a combination thereof.

As shown in FIG. 3, RL agent 302 is configured to interact with DL/FL system 100 in discrete time steps while the system is executing a training run $R$ for training ANN 106 (reference numeral 306). These time steps may or may not align with the rounds of training run $R$. At each time step $t$, RL agent 302 can receive a state $s_t$ (reference numeral 308) and a reward $r_t$ (reference numeral 310) from DL/FL system 100. State $s_t$ comprises information from parameter server 102 and/or clients 104(1)-($n$) pertaining to the current runtime properties/state of the system at time step $t$ with respect to training run $R$. For example, state $s_t$ may include from clients 104(1)-($n$):

- the gradients (or approximations thereof) computed by the clients in the most recent one or more rounds of training run $R$;

- statistics regarding the gradients (e.g., variance, norms, etc.);

- the number of training data instances (either in total or per client) that have been used so far in training run $R$;

- the loss of each client's local ANN copy 108 prior to initiating local training for the most recent round;

- the loss of each client's local ANN copy 108 after completing local training for the most recent round; and/or

- a breakdown of the above information for each training pass (in the scenario where each client performs multiple training passes on its local ANN copy 108 per round).

Alternatively or in addition, state $s_t$ may include from parameter server 102:

- the loss of the current global ANN 106; and/or

- aggregated statistics pertaining to the most recent one or more rounds (e.g., hyperparameter values used by the parameter server's optimization algorithm, the combined size of the training batches used by the clients, the amount of time needed for the parameter server to receive gradients from all participating clients, etc.).

Reward $r_t$ comprises one or more values that are proportional to metric(s) of training run $R$ that RL agent 302 is designed to optimize. For example, in one set of embodiments reward $r_t$ can include a lost improvement value that is proportional to the improvement in loss for ANN 106 from a previous round to the most recent round of $R$ (if RL agent 302 is designed to optimize training speed). In another set of embodiments, reward $r_t$ can include a fairness value that reflects how evenly each client has used its training data instances during $R$ (if RL agent 302 is designed to optimizing training fairness). In yet another set of embodiments, reward $r_t$ can include a resource minimization value that is inversely proportional to the amount of resources (e.g., CPU, network, etc.) consumed by the parameter server and/or clients in the most recent one or more rounds of $R$ (if RL agent 302 is designed to optimize resource consumption). One of ordinary skill in the art will recognize that these are merely examples and many other types of rewards may be implemented, either alone or in combination, to achieve various training goals.

Upon receiving state $s_t$ and reward $r_t$, RL agent 302 can determine and output, via its RL algorithm(s)/model(s) 304, an action $a_t$ (reference numeral 312) comprising information for modifying the aggregation function employed by parameter server 102 in a manner that maximizes the expected future cumulative rewards from DL/FL system 100 based on state $s_t$. For example, assume the aggregation function is a weighted average function that uses per-client weights (e.g., $F_{weighted\ avg}(g_1, \dots, g_n, w_1, \dots, w_n)$ where $g_1, \dots, g_n$ are the client gradients and $w_1, \dots, w_n$ are the client weights). In this case, action $a_t$ can include a modified weight for one or more of the clients.

As another example, assume the aggregation function is a linear combination of a weighted average function using client weights $w_1, \dots, w_n$ and a geometric median function using client weights $k_1, \dots, k_n$ as shown below:

$$\alpha \cdot F_{weighted\ avg}(g_1, \dots, g_n, w_1, \dots, w_n) + \beta \cdot F_{geometric\ mediam}(g_1, \dots, g_n, k_1, \dots, k_n)$$

### Listing 1

In this case, action $a_t$ can include modified values for any one or more of the following: coefficient $\alpha$, coefficient $\beta$, client weights $w_1, \dots, w_n$, and/or client weights $k_1, \dots, k_n$. Generally speaking, the aggregation function used by parameter server 102 can be structured as a linear combination of any number of subfunctions (so as to approximate various types of functions such as a power series, Taylor approximation, etc.), and action $a_t$ can include modified values for any of the coefficients of the linear combination and/or any of the input parameters of the subfunctions (excluding the gradients themselves).

Finally, at reference numeral 314, parameter server 102 can receive action $a_t$ and use the information included therein to modify/reconfigure its aggregation function accordingly (thereby causing the parameter server to use the modified aggregation function in training run $R$). The foregoing steps can subsequently repeat for further time steps $t+1$, $t+2$, etc. until training run $R$ is completed.

Significantly, because the action output by RL agent 302 at each time step changes the aggregation function in a way that maximizes the expected cumulative rewards from DL/FL system 100, the framework shown in FIG. 3 facilitates the optimization of system 100 to achieve different DL/FL training goals (in accordance with the reward). For example, as mentioned previously, if the goal is to improve training speed, the reward can be defined as a loss improvement value from a previous round to a current round. Although not shown in FIG. 3, it is assumed that the RL algorithm(s)/model(s) 304 of RL agent 302 are trained to some threshold level of accuracy prior to being deployed for use with DL/FL system 100. This ensures that RL agent 302 is capable of providing actions that maximize (or come close to maximizing) the accumulated reward. The training of RL algorithm(s)/model(s) 304 can be performed in various ways known in the art, such as using a sandbox environment.

It should be appreciated that FIGS. 1-3 and the description above are illustrative and not intended to be limit embodiments of the present disclosure. For example, although FIG. 3 depicts a particular arrangement of components, other arrangements are possible (e.g., the functionality attributed to a particular component may be split into multiple components, components may be combined, etc.). One of ordinary skill in the art will recognize other variations, modifications, and alternatives.

## 2. RL Workflow

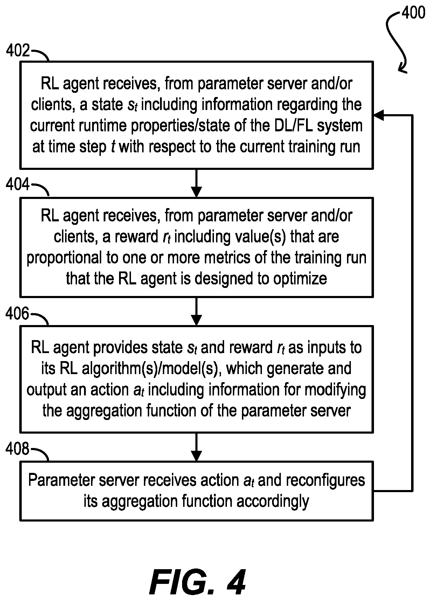

FIG. 4 depicts a workflow 400 of the RL processing attributed to RL agent 302 and DL/FL system 100 in FIG. 3 for a given time step $t$ according to certain embodiments. As noted previously, this processing may or may not be aligned in a one-to-one fashion with the training rounds executed by DL/FL system 100. For example, in one set of embodiments, RL agent 302 and DL/FL system 100 may execute workflow 400 for every training round. In other embodiments, RL agent 302 and DL/FL system 100 may execute workflow 400 for every $m$ training rounds, where $m$ is some number greater than 1.

Starting with step 402, RL agent 302 can receive, from parameter server 102 and/or clients 104(1)-($n$), a state $s_t$ including information regarding the current runtime properties/state of DL/FL system 100 at time step $t$ with respect to the training run being executed by the system. Further, at step 404, RL agent 302 can receive, from parameter server 102 and/or clients 104(1)-($n$), a reward $r_t$ including one or more values that are proportional to one or more metrics of the training run that RL agent 302 is designed to optimize, in view of state $s_t$.

At step 406, RL agent 302 can provide state $s_t$ and reward $r_t$ as inputs to its RL algorithm(s)/model(s) 304, which can generate and output an action $a_t$. This action can include information for modifying the aggregation function employed by parameter server 102 in a manner that maximizes (or attempts to maximize) the cumulative reward that is expected to be received from DL/FL system 100 from state $s_t$ onward. As mentioned previously, this information can comprise coefficients and/or per-client weights used by the aggregation function.

Finally, at step 408, parameter server 102 can receive action $a_t$ from RL agent 302, reconfigure its aggregation function in accordance with the information in $a_t$, and use the reconfigured aggregation function from that point onward in the training run. Workflow 400 can then loop back to step 402 so that it can be repeated for the next time step $t + 1$.

Certain embodiments described herein can employ various computer-implemented operations involving data stored in computer systems. For example, these operations can require physical manipulation of physical quantities-usually, though not necessarily, these quantities take the form of electrical or magnetic signals, where they (or representations of them) are capable of being stored, transferred, combined, compared, or otherwise manipulated. Such manipulations are often referred to in terms such as producing, identifying, determining, comparing, etc. Any operations described herein that form part of one or more embodiments can be useful machine operations.

Further, one or more embodiments can relate to a device or an apparatus for performing the foregoing operations. The apparatus can be specially constructed for specific required purposes, or it can be a generic computer system comprising one or more general purpose processors (e.g., Intel or AMD x86 processors) selectively activated or configured by program code stored in the computer system. In particular, various generic computer systems may be used with computer programs written in accordance with the teachings herein, or it may be more convenient to construct a more specialized apparatus to perform the required operations. The various embodiments described herein can be practiced with other computer system configurations including handheld devices, microprocessor systems, microprocessor-based or programmable consumer electronics, minicomputers, mainframe computers, and the like.

Yet further, one or more embodiments can be implemented as one or more computer programs or as one or more computer program modules embodied in one or more non-transitory computer readable storage media. The term non-transitory computer readable storage medium refers to any storage device, based on any existing or subsequently developed technology, that can store data and/or computer programs in a non-transitory state for access by a computer system. Examples of non-transitory computer readable media include a hard drive, network attached storage (NAS), read-only memory, random-access memory, flash-based nonvolatile memory (e.g., a flash memory card or a solid state disk), persistent memory, NVMe device, a CD (Compact Disc) (e.g., CD-ROM, CD-R, CD-RW, etc.), a DVD (Digital Versatile Disc), a magnetic tape, and other optical and non-optical data storage devices. The non-transitory computer readable media can also be distributed over a network coupled computer system so that the computer readable code is stored and executed in a distributed fashion.

Finally, boundaries between various components, operations, and data stores are somewhat arbitrary, and particular operations are illustrated in the context of specific illustrative configurations. Other allocations of functionality are envisioned and may fall within the scope of the invention(s). In general, structures and functionality presented as separate components in exemplary configurations can be implemented as a combined structure or component. Similarly, structures and functionality presented as a single component can be implemented as separate components.

As used in the description herein and throughout the claims that follow, "a," "an," and "the" includes plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of particular embodiments may be implemented. These examples and embodiments should not be deemed to be the only embodiments and are presented to illustrate the flexibility and advantages of particular embodiments as defined by the following claims. Other arrangements, embodiments, implementations, and equivalents can be employed without departing from the scope hereof as defined by the claims.

**Claims**

1. A method comprising:

   receiving, by a computer system implementing a reinforcement learning (RL) agent, a state from a distributed learning or federated learning (DL/FL) system, the DL/FL system including a parameter server and a plurality of clients, the state including information regarding one or more runtime properties of the DL/FL system with respect to a training run being executed by the DL/FL system for training an artificial neural network (ANN);
   receiving, by the computer system, a reward from the DL/FL system, the reward including one or more values that are proportional to one or more metrics of the training run that the RL agent is designed to optimize;
   generating, by the computer system, an action including information for modifying an aggregation function employed by the parameter server during the training run; and
   transmitting, by the computer system, the action to the parameter server.

2. The method of claim 1, wherein
   the information included in the action modifies the aggregation function in a manner that maximizes future rewards that are expected to be received from the DL/FL system in view of the state.

3. The method of claim 1 or 2, wherein
   upon receiving the action, the parameter server modifies the aggregation function in accordance with the information in the action.

4. The method of any one of the claims 1 to 3, wherein
   the state comprises information pertaining to gradients computed by a subset of the plurality of clients for one or more rounds of the training run.

5. The method of any one of the claims 1 to 4, wherein
   the state comprises aggregated statistics for one or more rounds of the training run that are collected by the parameter server.

6. The method of any one of the claims 1 to 5, wherein
   the reward comprises a loss improvement value that is proportional to an improvement in loss for the ANN from a previous round of the training run to a current round of the training run.

7. The method of any one of the claims 1 to 6, wherein
   the information included in the action comprises modified values for one or more coefficients or weights of the aggregation function.

8. A non-transitory computer readable storage medium having stored thereon program code executable by a computer system implementing a reinforcement learning (RL) agent, the program code causing the computer system to execute a method as set forth in any one of the preceding method claims.

9. A computer system implementing a reinforcement learning (RL) agent, the computer system comprising:

   a processor; and
   a non-transitory computer readable medium having stored thereon program code that, when executed, causes the processor to control and/or carry out a method as set forth in any one of the preceding method claims.

**FIG. 1**

**FIG. 2**

*FIG. 3*

400

402 ┐

RL agent receives, from parameter server and/or clients, a state $s_t$ including information regarding the current runtime properties/state of the DL/FL system at time step $t$ with respect to the current training run

404 ┐

RL agent receives, from parameter server and/or clients, a reward $r_t$ including value(s) that are proportional to one or more metrics of the training run that the RL agent is designed to optimize

406 ┐

RL agent provides state $s_t$ and reward $r_t$ as inputs to its RL algorithm(s)/model(s), which generate and output an action $a_t$ including information for modifying the aggregation function of the parameter server

408 ┐

Parameter server receives action $a_t$ and reconfigures its aggregation function accordingly

# FIG. 4

Europäisches Patentamt
European Patent Office
Office européen des brevets

# EUROPEAN SEARCH REPORT

Application Number

EP 24 20 2630

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 523 079 A (UNIV SOUTH CHINA TECH) 1 August 2023 (2023-08-01) * the whole document * | 1-9 | INV. G06N3/092 G06N3/098 |
| X | CN 115 238 905 A (TSINGHUA SHENZHEN INT GRADUATE SCHOOL) 25 October 2022 (2022-10-25) * the whole document * | 1-9 | ADD. G06N3/063 |
| X | CN 116 541 779 A (UNIV BEIJING POSTS & TELECOMM; BEIJING GEEKPLUS TECH CO LTD) 4 August 2023 (2023-08-04) * the whole document * | 1-9 | |

TECHNICAL FIELDS
SEARCHED    (IPC)

G06N

The present search report has been drawn up for all claims

| Place of search | Date of completion of the search | Examiner |
|---|---|---|
| The Hague | 17 February 2025 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 2630

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2025

| Patent document cited in search report | | Publication date | Patent family member(s) | Publication date |
|---|---|---|---|---|
| CN 116523079 | A | 01-08-2023 | NONE | |
| CN 115238905 | A | 25-10-2022 | NONE | |
| CN 116541779 | A | 04-08-2023 | NONE | |

EPO FORM P0459

For more details about this annex : see Official Journal of the European Patent Office, No. 12/82